# EUROPEAN PATENT SPECIFICATION

(11) **EP 1 829 267 B1**
(45) Date of publication and mention of the grant of the patent: **28.08.2013**
(21) Application number: 05852093.3
(22) Date of filing: 22.11.2005
(51) Int. Cl.: H04L 1/22, H04L 29/14, H04L 12/46, H04L 29/06, G06F 11/00, H04L 1/00, H04L 12/54

(54) **REDUNDANT L2TP END POINTS**
REDUNDANTE L2TP-ENDPUNKTE
POINTS D'EXTREMITE L2TP REDONDANTS

(30) Priority: 24.11.2004 US 996580
(43) Date of publication of application: 05.09.2007
(73) Proprietor: Cisco Technology, Inc., San Jose, CA 95134 (US)
(72) Inventor: PUTHIYANDYIL, Sanil Kumar, Nashua, NH 03062 (US); HARPER, Matthew H., Salem, New Hampshire 03079 (US)
(74) Representative: Kazi, Ilya
(86) International application number: PCT/US2005/042518
(87) International publication number: WO 2006/058106

(56) References cited:
- US-A1- 2003 235 268
- US-A1- 2004 095 881
- US-A1- 2004 097 232
- US-B1- 6 732 314
- VIPIN JAIN NORTEL NETWORKS ET AL: "Fail over extensions for L2TP; draft-vipin-l2tpext-failover-00.txt", IETF STANDARD-WORKING-DRAFT, INTERNET ENGINEERING TASK FORCE, IETF, CH, 1 May 2001 (2001-05-01), XP015036535, ISSN: 0000-0004
- VIPIN JAIN RIVERSTONE NETWORKS EDITOR: "Fail Over extensions for L2TP failover; draft-ietf-l2tpext-failover-04.t", IETF STANDARD-WORKING-DRAFT, INTERNET ENGINEERING TASK FORCE, IETF, CH, vol. l2tpext, no. 4, 1 September 2004 (2004-09-01), XP015038494, ISSN: 0000-0004
- KEYUR PARIKH MEGISTO SYSTEMS ANDY KOSCINSKI AMBER NETWORKS: "Proposed mechanism for L2TP failover handling; draft-parikh-l2tpext-failover-00.txt", IETF STANDARD-WORKING-DRAFT, INTERNET ENGINEERING TASK FORCE, IETF, CH, 1 May 2001 (2001-05-01), XP015033730, ISSN: 0000-0004

## Description

### Field of the Invention

The present invention relates to the field of data communications. More particularly, this invention relates to methods and systems for recovering from an interruption in, or failure of, tunnel communications when using the Layer 2 Tunneling Protocol.

### Background of the Invention

It is known that data and voice communications can be carried over telephone lines or other data communication channels, including the Internet. In both cases, modem communications systems commonly divide the communicated signals into discrete packets of a known format for delivery over a communications network. The packets are transmitted from a sending end of the network to a receiving end of the network, and are managed in various ways to provide secure and almost error free communication.

In the case of long-distance communications, packets may be exchanged over a telephone network, requiring potentially expensive long-distance calling to be made. Alternatively, packets may be exchanged at a generally lower cost by having each of the two parties to the communication connect to a local electronic, or computer server, where the respective local servers exchange information using the Internet's infrastructure.

A standard model for exchanging data packets over the Internet is the Open Systems Interconnection (OSI) model. The OSI model comprises a family of known protocols that cooperatively provide services that collectively result in successful transmission and reception of data packets over the Internet. More information on the operation and use of the OSI model in Internet communications can be found in the literature known to those skilled in the art of digital communications. Briefly, the OSI model provides seven layers of functionality (including the physical layer, the data link layer, the network layer, the transport layer, the session layer, the presentation layer, and the application layer), where each layer is interdependent on the surrounding layers or levels. At one end of the protocol stack (L7, or the application layer), the end-user of the communication communicates using a software application. At the other end of the protocol stack (L1, or the physical layer) resides the physical signal transmission medium.

The principles of the present invention apply primarily to the second layer of the OSI model (L2), which is known as the data link layer. L2 describes the logical organization of data bits being transmitted on a particular medium, and ensures bit-level integrity of the data being transmitted on the medium. L2 accomplishes its function by properly encapsulating the underlying packets in frames according to the L2 communication protocol. The framing of the data packets allows for bit error checking and correction, and includes network addressing information so that the frame can be properly delivered to its intended destination.

The Layer 2 Tunneling Protocol (L2TP), which is a known secure protocol used for connecting users to networks (e.g., virtual private networks (VPNs)) over public lines (such as the Internet), encapsulates Point-to-Point Protocol (PPP) frames that are sent using the Internet Protocol (IP). The PPP payload information can be compressed and/or encrypted as desired. Header information and datagram content are included in a User Datagram Protocol (UDP) message that is sent across a "tunnel" from one server to another. A tunnel is established between two servers using L2TP as provided in RFC 2661, available at http://www.ietf.org/rfc/rfc2661.txt. Establishing an L2TP tunnel generally requires the communicating servers (tunnel ends) to exchange tunnel state information (TSI) with each other, which as explained below, may include various information. Additionally, during the communication session, packet sequence numbers are exchanged to maintain the sent and received packets in a proper synchronized order.

In past communications systems, a difficulty generally arises when an L2TP tunnel is interrupted (e.g., lost or broken) or fails due to, for example, a software or a hardware fault (or failure) at one or both of the tunnel endpoint servers. In these systems, packet sequence numbers can become lost or de-synchronized between the two ends of the L2TP tunnel. In this situation, the receiving server will no longer recognize the misnumbered packets as being properly directed to it, and will ignore, or "drop," the incoming packets. The effect of improper packet sequence numbering is thus to lose the L2TP communications tunnel, requiring a time-consuming reconnection of the tunnel.

Protocol extensions used to indicate a peer about to fail to help a failed system recover better and exhibit more predictable behavior are disclosed in a paper entitled "Fail over extensions for L2TP; draft-vipin-12tpext-failover-00.txt" by Vipin Jain, published as an IETF Standard Working Draft on 1st May 2001, XP015036535. Protocol extensions to L2TP intended to facilitate state recovery, providing additional resiliency in an L2TP network and improving a remote system's layer 2 connectivity are disclosed in a paper entitled "Fail Over extensions for L2TP failover; draft-ietf l2tpext-failover-04.txt" by Vipin Jain, published as an IETF Standard Working Draft on 1st September 2004, XP015038494. An extension to L2TP that provides a mechanism to support a failover to a hot standby unit and a continued L2TP operation with a goal to minimize payload data loss during fail over is disclosed in a paper entitled "Proposed mechanism for L2TP failover handling; draft-parikh-12tpext-failover-00.txt" by Keyur Parikh, published as an IETF Standard Working Draft on 1st May 2001, XP015033730.

Accordingly, it is desirable to provide methods and systems for recovering from an interruption in, or failure of, an L2TP tunnel, such that reconnection of the tunnel is not required.

### Summary of the Invention

The invention is defined in independent claims 1, 6 and 11.

Methods and systems are provided for recovering from an interruption in, or failure of, an L2TP tunnel endpoint, such that reconnection of the tunnel is not required. According to the invention, redundant storage of tunnel state information is used to avoid having to reconnect an interrupted or failed tunnel. Also, according to the invention, extraction of sequence numbers from a peer L2TP endpoint server is achieved by subdividing the universe, or set of all available sequence numbers into an appropriate number of divisions, and sending a control message having a sequence number from each of the divisions to the peer endpoint server to elicit a response.

In a first embodiment, the invention provides a method for recovering a communications session over a tunnel established using the Layer 2 Tunneling Protocol when a task fails and causes failure of the tunnel, where the method includes storing tunnel state information, descriptive of the tunnel, in more than one location prior to the failure of the tunnel, activating at least one backup task that is substantially capable of replacing the failed task upon the failure of the tunnel, providing the stored tunnel state information to the at least one backup task, and resuming communication over the tunnel using the stored tunnel state information and the backup task.

In a second embodiment, the invention provides a method for recovering a communications session over a tunnel established using the Layer 2 Tunneling Protocol when a task fails and causes failure of the tunnel, where the method includes storing tunnel state information, descriptive of the tunnel, in more than one location prior to the failure of the tunnel, restarting the failed task upon the failure of the tunnel, providing the stored tunnel state information to the restarted task when the failed task is restarted, and resuming communication over the tunnel using the stored tunnel state information and the restarted task.

In a third embodiment, the invention provides a method for recovering a failed communications session over a tunnel established using the Layer 2 Tunneling Protocol after a message sequence number of a first tunnel endpoint is no longer available, where the method includes sending a first control message from the first tunnel endpoint to a second tunnel endpoint, the first control message having a first sequence number, sending a second control message from the first tunnel endpoint to the second tunnel endpoint, the second control message having a second sequence number that is different from the first sequence number, receiving a response control message from the second tunnel endpoint, the response control message containing a peer sequence number from of the second tunnel endpoint, and using the peer sequence number of the second tunnel endpoint as a basis for determining future message sequence numbers of control messages sent from the first tunnel endpoint.

In a fourth embodiment, the invention provides a communications system capable of recovering a communications session over a tunnel established using the Layer 2 Tunneling Protocol following a failure of the tunnel, where the system includes a first component that stores tunnel state information descriptive of the tunnel prior to the failure of the tunnel, wherein the failure of a first task running on the first component causes the failure of the tunnel, the system includes a second component that stores the tunnel state information prior to the failure of the tunnel, and the system includes a third component that does not store the tunnel state information prior to the failure of the tunnel, wherein, upon failure of the tunnel, the tunnel state information stored in the second component is provided to the third component, and communication over the tunnel is resumed using a second task running on the third component and the tunnel state information provided to the third component.

In a fifth embodiment, the invention provides a communications system capable of recovering a communications session over a tunnel established using the Layer 2 Tunneling Protocol following a failure of the tunnel, where the system includes a first component that stores tunnel state information descriptive of the tunnel prior to the failure of the tunnel, wherein the failure of a first task running on the first component causes the failure of the tunnel, and the system includes a second component that stores the tunnel state information prior to the failure of the tunnel, wherein, upon failure of the tunnel, the failed first task is restarted and subsequently provided the tunnel state information stored in the second component, and wherein communication over the tunnel is resumed using the restarted first task and the tunnel state information from the second component.

In a sixth embodiment, the invention provides a system for recovering a communications session over a tunnel established using the Layer 2 Tunneling Protocol when a task fails and causes failure of the tunnel, where system includes means for storing tunnel state information, descriptive of the tunnel, in more than one location prior to the failure of the tunnel, means for activating at least one backup task that is substantially capable of replacing the failed component upon the failure of the session, means for providing the stored tunnel state information to the at least one backup task, and means for resuming communication over the tunnel using the stored tunnel state information and the backup task.

In a seventh embodiment, the invention provides a system for recovering a communications session over a tunnel established using the Layer 2 Tunneling Protocol when a task fails and causes failure of the tunnel, where the system includes means for storing tunnel state information, descriptive of the tunnel, in more that one location prior to the failure of the tunnel, means for restarting the failed task upon the failure of the tunnel, means for providing the stored tunnel state information to the restarted task after the failed task has been restarted, and means for resuming communication over the tunnel using the stored tunnel state information and the restarted task.

### Brief Description of the Drawings

Additional embodiments of the invention, its nature and various advantages, will be more apparent upon consideration of the following detailed description, taken in conjunction with the accompanying drawings, in which like reference characters refer to like parts throughout, and in which:

FIG. 1 is a simplified illustration of one embodiment of a communications system including two communications servers in which the present invention may be implemented;

FIG. 2 is a simplified illustration of the two servers shown in FIG. 1 communicating over an L2TP tunnel according to one embodiment of the present invention;

FIG. 3 is a representative illustration of the available sequence numbers used in exchanging control messages over an L2TP tunnel in accordance with one embodiment of the present invention;

FIG. 4 is a simplified illustration of a series of communications between a recovering endpoint server and a peer endpoint server according to one embodiment of the present invention; and

FIG. 5 is a flow chart illustrating the steps performed in recovering from an interrupted or failed L2TP tunnel session according to one embodiment of the present invention.

### Detailed Description of the Invention

Methods and systems are described in greater detail below for recovering from an interruption in, or failure of, an L2TP tunnel endpoint, such that reconnection of the tunnel is not required. It should be noted that certain features, which are well known in the art, are not described in great detail in order to avoid complication of the subject matter of the present invention.

As described briefly above, improper data packet sequence numbering in an L2TP tunnel can result in lost communications, possibly requiring re-establishment of the L2TP tunnel and causing reduced communications efficiency. The various aspects and embodiments of the present invention described in greater detail below provide for re-establishing L2TP connections to recover from faults (or failures) that resulted in a loss of packet sequence numbering data and other data used in maintaining L2TP tunnels under the present standards. According to various embodiment of the invention, the present invention is used by persons communicating with a home network while they are geographically away from the home network. In other embodiments, the invention is used by persons communicating with other persons separated from them over a significant geographical distance. The invention is not, however, limited in this manner.

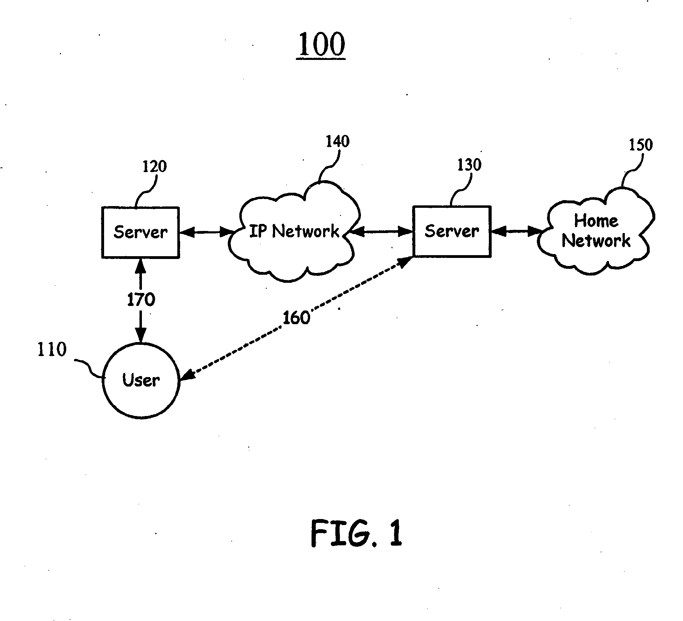

FIG. 1 is a simplified illustration of one embodiment of a communications system 100 in which the present invention may be implemented. As shown in FIG. 1, communications system 100 includes a user 110, two communications servers 120 and 130, IP network 140, and home network 150 (which user 100 seeks to access). In communications system 100, user 110 may access home network 150 (which may be, for example, a VPN using private IP addressing) in two alternative ways. First, a Layer 2 (L2) connection (shown as a dashed line in FIG. 1) connects user 110 to server 130 over a long-distance telephone connection 160. Using server 130 as a gateway, data may then be exchanged between user 110 and home network 150. It will be appreciated by persons versed in the art that, once user 110 has been assigned an IP address by home network 150, user 110 can use a Layer 3 (L3) protocol, such as the Internet Protocol (IP), to access home network 150. According to this manner of connection, user 110 generally incurs the costs of dialing into remote server 130. These costs are dictated, for example, by the long-distance telephone access costs, and are usually billed by service providers on a minutes used basis.

As mentioned above, a second, alternate method for connecting user 110 to home network 150 is also shown in FIG. 1. Using the second method, user 110 connects to server 120 over a local, Layer 2 (L2) connection 170, and an L2TP tunnel is used to extend this connection to server 130. Again, once user 110 has been assigned an IP address by home network 150, user 110 can use a Layer 3 (L3) protocol, such as the Internet Protocol (IP), to access home network 150. Moreover, because user 110 is connecting to a local server 120, in general, user 110 will not incur long-distance calling costs (unlike in the connection described above using connection 160). The principles of the present invention as described below are primarily concerned with this second mode of communication, which employs server 120, relatively local to user 110 who initiates a call, and server 130, relatively remote from user 110, but nearer to the destination of the call than server 120. However, the invention is not limited in this manner, and, for example, the respective locations of servers 120 and 130 with respect to user 110 (or each other) are not limiting.

In the second method, local server 120 establishes a connection over IP network 140 (e.g., the Internet) to remote server 130, which provides the gatekeeping function to home network 150 as described above. Here, an L2TP tunnel is established between servers 120 and 130 (also referred to in this context as endpoint servers, or tunnel endpoint servers), and datagrams conforming to L2TP are exchanged between servers 120 and 130. It should also be noted that, server 120, which is at the user/originator end of the L2TP tunnel, is also referred to as an L2TP Access Concentrator (LAC). In addition, server 130, which is at the receiving end of the L2TP tunnel, is also referred to as an L2TP Network Server (LNS).

In order to establish and carry on a successful communications session using an L2TP tunnel, both endpoint server 120 (or LAC 120) and endpoint server 130 (or LNS 130) must exchange certain required information according to L2TP, and may exchange other optional information as well. Following successful establishment of an L2TP tunnel, the endpoint servers can exchange payload information. The process of establishing an L2TP tunnel is now discussed in more detail, followed by a discussion concerning the consequences of a failure at either L2TP tunnel endpoint 120 or 130 and ways to recover from such a failure according to various embodiments of the present invention.

LAC 120 and LNS 130 establish an L2TP tunnel by making a connection and exchanging control data as mentioned earlier. Three particular exchanges between LAC 120 and LNS 130 are called for by L2TP to establish an L2TP tunnel.

First, LAC 120 sends a Start Control Connection Request (SCCRQ) control message to LNS 130 when an incoming call is detected from user 110. The SCCRQ control message generally includes the message type, assigned session ID, and host name. The SCCRQ control message may optionally include receive window size, authentication challenge, and other information. Moreover, the SCCRQ control message is used to indicate to LNS 130 that an L2TP tunnel is to be established between the two servers to facilitate the incoming call.

The second step in establishing an L2TP tunnel is for LNS 130 to respond to the SCCRQ control message by sending a Start Control Connection Reply (SCCRP) message to. LAC 120. The SCCRP is a control message indicating that the SCCRQ was successfully received, and that LNS 130 is ready to establish the requested tunnel. Generally speaking, the SCCRP message includes a message type and an assigned session ID number. In addition, according to various embodiments of the invention, the SCCRP includes other control information or parameters provided by LNS 130 that may be useful for establishing the L2TP tunnel.

The third and final step in establishing an L2TP session between LAC 120 and LNS 130 is for LAC 120 to send to LNS 130 a Start Control Connection Connected SCCCN control message (in response to the received SCCRP message). The SCCCN indicates that the SCCRP message was accepted by LAC 120, , and that the L2TP tunnel should move to the established state. The SCCCN message generally includes a message type, and challenge response...

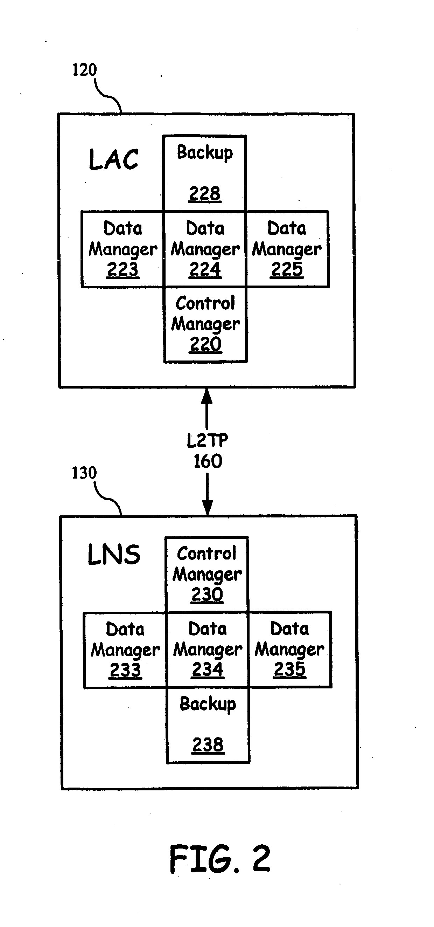

FIG. 2 is a simplified illustration of LAC 120 and LNS 130 of FIG. 1, which are communicating over an L2TP tunnel 160 according to one embodiment of the present invention. As explained above, LAC 120 and LNS 130 provide the endpoints for L2TP tunnel 160. Moreover, the TSI used to manage and track the L2TP tunnel 160 includes, for example, IP header information, UDP header information, L2TP header information, and other control and payload data. Of particular concern in the present context is the L2TP header information. L2TP header information includes, for example, the type of message (data or control), message length, message offset, tunnel ID number (indicating the local identifier for the control connection), session ID information, and transmit and receive sequence numbers.

According to various embodiments of the present invention, as shown in FIG. 2, a number of tasks (e.g., processes, operations and/or applications) running on LAC 120 and LNS 130 are used for managing and handling one or more L2TP tunnel connections (for simplicity, only one tunnel 160 is shown). Among these tasks are Control Manager tasks 220 and 230 of LAC 120 and LNS 130, respectively, which are responsible for control functions relating to the establishment and operation of L2TP tunnels on their respective servers.

According to the invention, at least one respective Data Manager task runs on both LAC 120 and LNS 130. For example, according to various embodiments such as the one shown in FIG. 2, there are three Data Manager tasks 223-225 running on LAC 120, and three Data Manager tasks 323-325 running on LNS 130. According to other embodiments, one or both of LAC 120 and LNS 130 have one or two Data Manager tasks running thereon, or more than three such Data Manager tasks (e.g., hundreds of Data Manager tasks). Although not required, Data Manager tasks 223-225 of LAC 120 may each be disposed on a separate circuit board (or card) mounted within LAC 120, with each circuit board executing software to achieve its functionality. The same may be true for LNS 130. Generally, but not necessarily, each of the Data Manager tasks 223-225 of LAC 120 (and the corresponding Data Manager tasks 323-325 of LNS 130) respectively handle the user session related data exchange associated with one L2TP tunnel connection.

Also running on LAC 120 shown in FIG. 2 is at least one Backup task 228. Similarly, at least one Backup task 238 is running on LNS 130. The purpose of Backup tasks 228 and 238 is to provide an available task that is ready to take the place of a Data Manager task or Control Manager task in the event of a software fault (or failure) associated with one of these tasks, or a hardware fault (or failure) of the component (e.g., circuit board, or card) on which one of these tasks is running. The number of Backup tasks 228 and 238 running on each server 120 and 130 is a matter of design choice, and the invention is not limited in this manner.

The sequence of events that generally take place in the event of a fault (or failure) associated with a Data Manager task or a Control Manager task during an L2TP session is now explained. As mentioned above, in past communications systems, a failure of an L2TP tunnel during an active L2 session would result in a significant degradation in performance. This is because, in past communications systems, the TSI information for an L2TP tunnel was likely to be lost as a result of the failure, in which case the tunnel would have to be re-established according to the three-step scheme described above. Re-establishment of an L2TP tunnel session, however, carries with it performance penalties because of the time it takes to re-establish the tunnel. Reconnection of the tunnel will also cause user network connection to be reestablished. In addition, degraded reliability results from dropped or lost data packets that are sent during the time the tunnel is inoperative. Also, there is no guarantee that the other endpoint server will accept the tunnel session when a recovering server attempts to re-establish the tunnel.

According to various embodiments of the present invention, in order to reduce (or eliminate) the possibility of a lost L2TP tunnel, redundancy is used to store TSI for any (or all) active L2TP tunnels. More particularly, according to various embodiments of the present invention, TSI information is stored with more than one component in both LAC 120 and LNS 130. For example, in connection with LAC 120, TSI information associated with L2TP tunnel 160 may be stored with a first component (e.g., circuit board, or card) on which Control Manager task 220 is running, as well as on a second component (e.g., circuit board, or card) on which Data Manager task 224 is running. In this case, upon a fault or failure of the Data Manager task 224 or the second component on which it is running, the Control Manager task 220, under control of software instructions, transfers a copy of the TSI information being stored with the first component to a third component on which Backup task 228 (or another Backup task that is not shown) is running. In turn, Backup task 228 promptly takes the place of failed Data Manager task 224. Because Backup task 228 is operationally and by design capable of carrying out substantially the same functions as failed Data Manager task 224, it is able to be pressed into service by providing it with the copied TSI information.

According to various embodiments of the present invention, in the case of a failure of Control Manager task 220 (which generally controls a plurality of L2TP tunnels) or the second component on which it is running, failure control software causes duplicate TSI information associated with each active Data Manager task (e.g., Data Manager tasks 223 and 224 of LAC 12) to be transferred to the component on which Backup task 228 is running, after which time Backup task 228 is able to carry out the functions of the failed Control Manager task 220.

It should be noted that faults and failures such as described above are not always fatal, and in some instances, the failed task (or failed component on which a task is running) can be restarted and used once again. In this case, when the same task or component that failed is to be returned to service, the TSI information may be delivered to the failed task or component after it has been restarted (and there is generally no need to use a Backup task running on another component).

In the manner described above, redundant TSI information is stored, and selectively provided in the L2TP endpoint servers so that it is not necessary to go through the process of re-establishing a failed L2TP tunnel. Rather, as explained above, data communication over the same L2TP tunnel can continue promptly after a redundant component (or the same component, after rebooting or restarting) is provided with the necessary TSI information.

According to various embodiments of the invention, tunnel endpoint servers 120 and 130 are considered peers. Moreover, it should be noted that tunnel endpoint servers 120 and 130 can, according to various embodiments of the invention, have similar or identical construction. However, servers 120 and 130 are generally not required to be identical (or even similar), so long as they can provide L2TP connection services. For example, one or both of servers 120 and 130 may be implemented in the ST-16 Intelligent Mobile Gateway from Starent Networks, Inc. of Tewksbury, Mass., USA. It should also be noted that other L2TP tunnels and OSI-compatible connections to other servers, and other auxiliary network devices and features, are also connectable to those shown. It should be appreciated that, as explained above, each of the Control Manager tasks 220 and 230, Data Manager tasks 223-225 and 232-235, and Backup tasks 228 and 238 may be running on different components (e.g., circuit boards, or cards), each of which will generally include onboard processing capability and data storage capability. Moreover, servers 120 and 130 shown in FIG. 2 do not provide shared memory within the servers. For this reason, each L2TP tunnel and its associated TSI, the contents of which is explained above, is stored with the associated components of Data Manager tasks 223-225 and Control Manager tasks 220 and 230. It will be appreciated by persons versed in the art, however, that the invention is not limited in this manner, and that shared memory may be used without departing from the principles of the present invention.

Other aspects of the present invention, which are now described in greater detail, concern the control message sequence number handling at (or about) the time of a failure of an L2TP tunnel. For example, according to various embodiments of the present invention, methods and systems compatible with the L2TP standard (RFC 2661) are provided for a first L2TP tunnel endpoint server to obtain the correct message sequence numbers from a second L2TP tunnel endpoint server after sequence numbers become lost (e.g., due to a fault or failure at the first L2TP tunnel endpoint server). In this manner, it is unnecessary to re-establish a failed L2TP tunnel session because the sequence numbers were lost. Rather, according to the invention, the connection may continue without the second L2TP tunnel endpoint dropping or ignoring mis-sequenced messages from the first L2TP tunnel endpoint.

As was discussed earlier, control data is exchanged between two L2TP tunnel endpoint servers (e.g., LAC 120 and LNS 130). The sequence numbers in the L2TP header include a sent sequence number (Ns) and a received or expected sequence number (Nr).

Ns signifies the sequence number of a message being sent by an L2TP endpoint server. In L2TP, the sequence numbers are generally 16 bit numbers, and therefore, Ns (as well as Nr) begins at 0 and is continually incremented by one (MOD 2** 16). For example, once the incremental value reaches 65,535, Ns becomes equal to 0, and then continues to increment from 0. The Ns value is incremented for each new control message transmitted to the peer.

Nr, on the other hand, signifies the sequence number of a message expected in the next control message received by an L2TP endpoint server. Thus, Nr is equal to the Ns of the last in-order message received from the peer plus one (MOD 2**16). Accordingly, as with the value of Ns, the maximum value of Nr is 65,535, after which point the value becomes 0,1, and so on.

As persons versed in the art will appreciate, Nr and Ns are mandatory for L2TP control messages. Strict sequence number checking is generally done when a packet is received to make sure that the sequence number of the control message is correct and expected. By using Nr and Ns, L2TP implements reliable transport for the control messages, so there is message retransmission in the event of a "lost" message. Nr serves as an acknowledgement sequence number, indicating to the peer that it has successfully received the message up to sequence number Nr. Nr/Ns sequence numbers are optional for L2TP data messages, and message retransmission is not recommended.

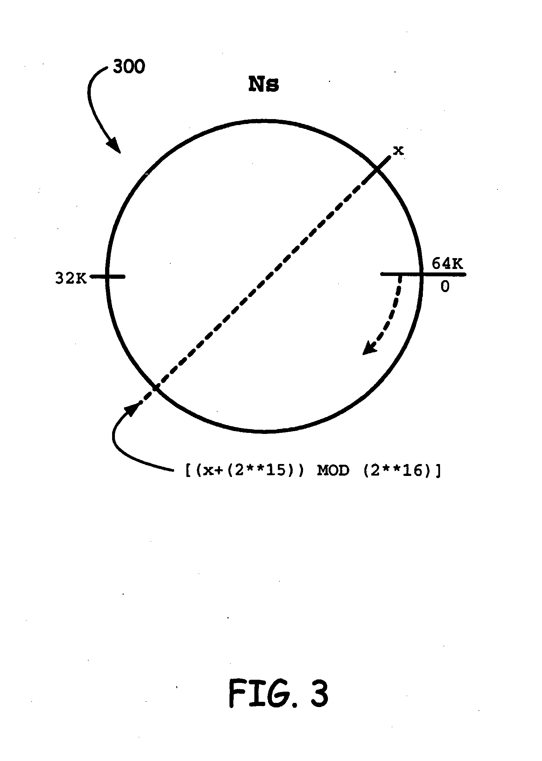

FIG. 3 is a representative illustration of the available sequence numbers used in exchanging control messages over an L2TP tunnel in accordance with one embodiment of the present invention. As shown in FIG. 3, sequence numbering of Ns, for example, conceptually rotates about a circle 300 that modulates the count by 65,536 (which, for the sake of simplicity, will be approximated to 64K), restarting at 0 after the highest sequence number in the 16 bit universe is reached.

As will be appreciated by persons versed in the art, a relatively wide window of tolerance is allowed under L2TP to determine whether a received control message was a duplicate (retransmitted) message. In effect, the L2TP standard allows any Ns sequence number falling within the last 32K of the correct Ns value to be considered duplicative. That is, if the peer is retransmitting any message with a sequence number of the last 32K range, it is considered to be a duplicate. Any peer tunnel endpoint server receiving a control message (e.g., a "Hello" keep alive message) within this window will retransmit its last acknowledgement (e.g., using a Zero Length Body (ZLB) reply), including the current Nr and Ns of that tunnel. Therefore, if a recovering L2TP endpoint server sends out two "Hello" control messages, each having a value of Ns separated by 32 K in the 64K universe of possible Ns values, then at least one of the two "Hello" control messages will be considered to be a duplicate and will elicit a useful ZLB response message, including the peer's current Ns and Nr sequence numbers in response. In this manner, a failed L2TP endpoint server can "trick" its peer into proffering the unknown or lost sequence numbers by eliciting the peer's Ns and Nr sequence numbers, then resetting its sequence numbers (Ns, Nr) to their corresponding proper values. The recovering L2TP endpoint server can thereby fully restore its lost Ns and Nr sequence numbers to what they should be in order to continue communicating with the peer endpoint server.

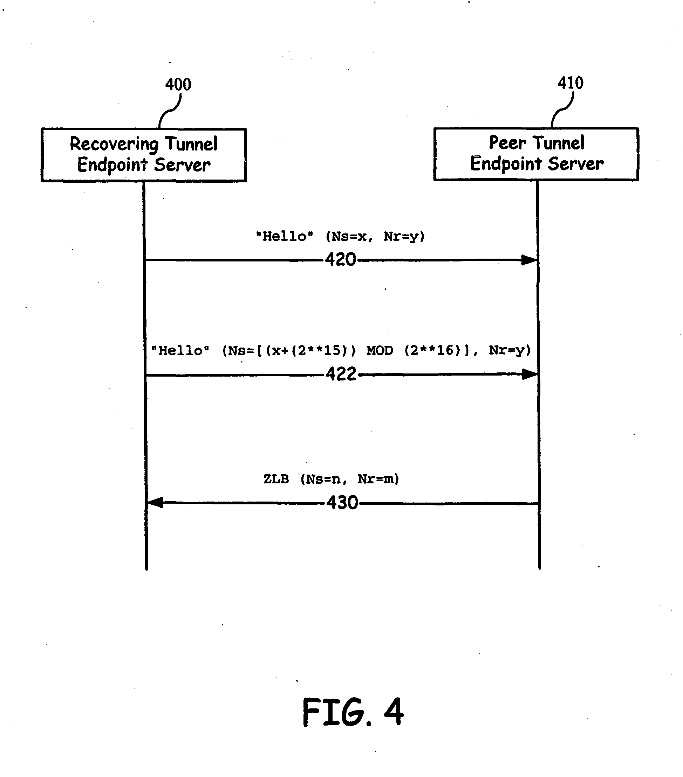

FIG. 4 is a simplified illustration of a series of communications between a recovering endpoint server and a peer endpoint server according to one embodiment of the present invention. If an L2TP tunnel fails, the failed tunnel endpoint server may have lost track of the proper control message sequence numbers (Ns, Nr). On recovery of the failed component as described above, the recovering tunnel endpoint server 400 (which may be, e.g., LAC 120) seeks to continue communication over the L2TP tunnel with a tunnel endpoint server 410 (which may be, e.g., LNS 130). However, immediately following its failure, the recovering L2TP tunnel endpoint server 400 does not have the necessary control message sequence numbers for successful communication with peer server 410.

Therefore, according to the principles of the present invention, recovering endpoint server 400 sends two successive interrogatory "Hello" control messages 420 and 422 containing selected sequence numbers Ns and Nr so that recovering endpoint server 400 can elicit from the endpoint server 410 the correct sequence numbers (Ns, Nr) that endpoint server 410 is expecting. More specifically, a first "Hello" (keep-alive) control message 420 is sent by recovering endpoint server 400 to peer endpoint server 410 with potentially contrived, or arbitrary sequence numbers Ns = x and Nr = y, where x and y are between 0 and 64K (again, an approximation of 65,535 is being used for the sake of simplicity). In addition, recovering endpoint server 400 sends to peer endpoint server 410 a second "Hello" control message 422. The second "Hello" control message 422, however, is provided with the sequence numbers Ns = [(x + (2**15)) MOD (2** 16)] and Nr = y. It will be understood by persons versed in the art that the Nr value can be any number, given that only the Ns needs to fit the "duplicate message" definition for a response to be received from the peer. Thus, it is assured that at least one of the two "Hello" control messages 420 and 422 will lie within the window allowed by L2TP for duplication, and that peer endpoint server 410 will respond to this "Hello" control message with the desired ZLB message 430 that carries the desired Ns = n and Nr = m values that recovering endpoint 400 will use to reset its sequence numbers (Ns, Nr) to their corresponding proper values.

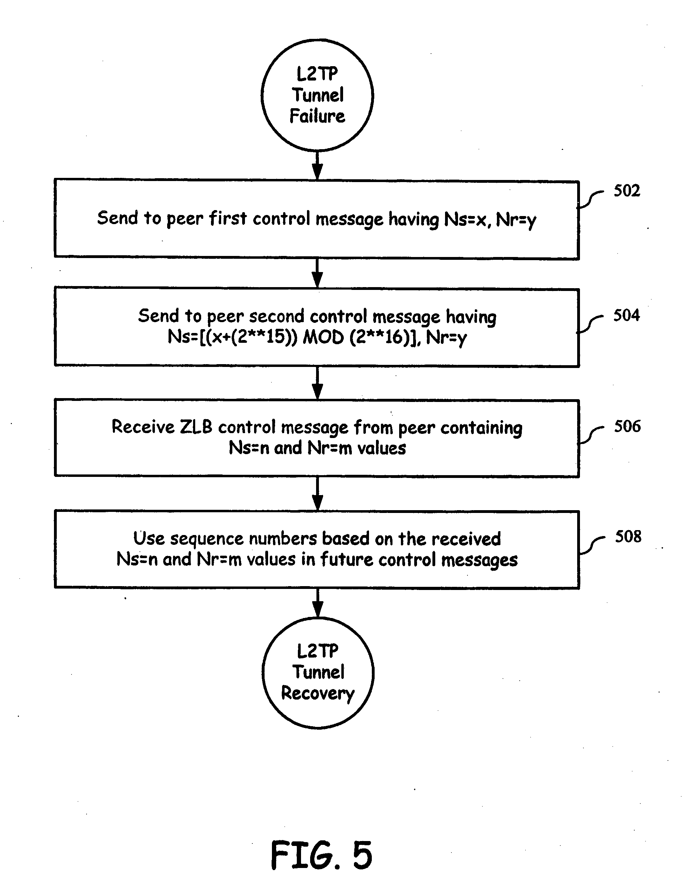

FIG. 5 is a flow chart illustrating the steps performed in recovering from an interrupted or failed L2TP tunnel session according to one embodiment of the present invention. At step 502, following the failure, the recovering L2TP tunnel endpoint server (e.g., LAC 120) sends a first control message (e.g., a "Hello" control message) to its peer endpoint server (e.g., LNS 130), having a value of Ns = x, where x can be an arbitrary number in the allowed universe of values between 0 and 64K (again, 64k is used as an approximation of 65, 536), and Nr = y.

At step 504, the recovering endpoint server sends a second control message (e.g., also a "Hello" control message) to its peer endpoint server, with the second control message having a value ofNs greater than that of the first control message's Ns by 32K, or Ns = [(x + (2** 15)) MOD (2** 16)], and Nr = y. It should be noted that, in practice, the second control message will have a value ofNs greater than that of the first control message's Ns by other than exactly 32k. The peer tunnel endpoint server is thus drawn to accepting one of the "Hello" messages as a duplicative message (according to the tolerance built into the L2TP standard). Accordingly, at step 506, the peer endpoint server sends, for example, a ZLB message to the recovering tunnel endpoint server, with the ZLB message including the proper sequence numbers (Ns, Nr) from the point of view of the peer endpoint server.

Once the desired Ns = n and Nr = m values are received from the peer endpoint server at step 506, the recovering endpoint server uses these values of the sequence numbers to properly formulate its next message's sequence numbers, at step 508. Specifically, the next Ns and Nr values of the recovering endpoint server would be equal to the respective Nr and Ns values of the peer endpoint server. Subsequent L2TP tunnel messages will thus be communicated without loss at the peer endpoint server's end of the tunnel because they were sent with the correct expected sequence numbers.

Although the invention has been described and illustrated in the foregoing illustrative embodiments, it is understood that the present disclosure has been made only by way of example, and that numerous changes to the details of implementation of the invention can be made without departing from the scope of the invention. For example, if the L2TP standard, or another standard adapted to the present concepts uses values different than those described herein or in RFC 2661, those differences will fall within the scope of the present disclosure.

Additionally, for example, if the tolerance band or window of acceptable sequence numbers that would trigger a ZLB message from a peer is changed, a different division of the circle 300 of FIG. 3 would result. Specifically, if the allowable tolerance is cut by half from its present value, circle 300 would be divided into four quarters, potentially only one quarter of which will contain acceptable Ns values to trigger the ZLB response described above. In this case four (or more) consecutive "Hello" messages, each having a value of Ns calculated to fall in a distinct quartile of possible Ns values, will be sent by the recovering tunnel endpoint server 400 to peer endpoint server 410.

Therefore, other embodiments, extensions, and modifications of the ideas presented above are comprehended and should be within the reach of one versed in the art upon reviewing the present disclosure. Accordingly, the scope of the present invention in its various aspects should not be limited by the examples presented above. The individual aspects of the present invention, and the entirety of the invention, should be regarded so as to allow for such design modifications and future developments within the scope of the present disclosure. The present invention is limited only by the claims which follow.

## Claims

1. A method for recovering a communications session over a tunnel established using the Layer 2 Tunneling Protocol, L2TP, between a communications server (120) and a peer endpoint server (130) when a task fails and causes failure of the tunnel, the method comprising:
storing tunnel state information, descriptive of the L2TP tunnel, in at least first (223) and second (224) separate components of the communications server prior to a failure of the L2TP tunnel;
in response to the failure of the L2TP tunnel, activating at least one backup task on a third component (228) of the communications server (120) that does not store the tunnel state information prior to the failure of the tunnel and which is provided with the tunnel state information from the second (224) component upon failure of the tunnel, the at least one backup task using the stored tunnel state information stored on the third component (228) to resume communication over the L2TP tunnel, wherein the at least one backup task replaces a failed task on the first component of the communications server in order to communicate over the L2TP tunnel.

2. The method of claim 1, wherein the at least first and second separate components are two or more separate circuit boards or cards.

3. The method of claim 1, wherein the failure of the L2TP tunnel is the result of a failure of the first component on which the failed task, which is a data manager task, is running.

4. The method of claim 1, wherein the tunnel state information comprises L2TP header information.

5. The method of claim 4, wherein the L2TP header information comprises a sequence number identifying a communication message.

6. A communications server for recovering a communications session over a tunnel established using the Layer 2 Tunneling Protocol, L2TP, between the communications server (120) and a peer endpoint server (130) when a task fails and causes failure of the tunnel, the server comprising:
first (223) and second (224) separate components that are adapted to store tunnel state information, descriptive of the L2TP tunnel, prior to a failure of the tunnel;
a third component (228) that is adapted not to store the tunnel state information prior to the failure of the L2TP tunnel; and
wherein, upon failure of the L2TP tunnel, the second component is adapted to provide the tunnel state information stored to the third component, and the third component is adapted to resume communication over the L2TP tunnel using at least one backup task running on the third component and the tunnel state information provided to the third component (228), wherein the at least one backup task replaces a failed task on the first component (223) of the communications server in order to communicate over the L2TP tunnel.

7. The communications server of claim 6, wherein the first and second separate components are two or more separate circuit boards or cards.

8. The communications server of claim 6, wherein the failure of the L2TP tunnel is the result of a failure of the first component on which the failed task, which is a data manager task, is running.

9. The communications server of claim 6, wherein the tunnel state information comprises L2TP header information.

10. The communications server of claim 9, wherein the L2TP header information comprises a sequence number identifying a communication message.

11. A computer readable medium including executable instructions which, when executed in a processing system, cause the processing system to perform a method according to any one of claims 1 to 5.

## Patentansprüche

1. Verfahren zur Wiederherstellung einer Kommunikationssitzung über einen Tunnel, die durch Verwendung des Schicht-2-Tunnel-Protokolls, L2TP, zwischen einem Kommunikationsserver (120) und einem Peer-Endpunktserver (130) hergestellt ist, wenn eine Aufgabe ausfällt und einen Ausfall des Tunnels verursacht, wobei das Verfahren Folgendes umfasst:
Speichern von Tunnelzustandsinformationen, die den L2TP-Tunnel beschreiben, in mindestens einer ersten (223) und einer zweiten (224) getrennten Komponente des Kommunikationsservers vor einem Ausfall des L2TP-Tunnels;
als Reaktion auf den Ausfall des L2TP-Tunnels wird Folgendes aufgeführt: Aktivieren mindestens einer Sicherungsaufgabe auf einer dritten Komponente (228) des Kommunikationsservers (120), die die Tunnelzustandsinformationen vor dem Ausfall des Tunnels nicht speichert und die mit den Tunnelzustandsinformation von der zweiten (224) Komponente bei einem Ausfall des Tunnels versehen ist, wobei die mindestens eine Sicherungs-Aufgabe die gespeicherten Tunnelzustandsinformationen, die auf der dritten Komponente (228) gespeichert sind, zur Wiederaufnahme der Kommunikation über den L2TP-Tunnel nutzt, wobei die mindestens eine Sicherungs-Aufgabe eine fehlgeschlagene Aufgabe auf der ersten Komponente des Kommunikationsservers ersetzt, um über den L2TP-Tunnel zu kommunizieren.

2. Verfahren nach Anspruch 1, wobei die mindestens erste und zweite getrennte Komponente zwei oder mehr separate Platinen oder Karten sind.

3. Verfahren nach Anspruch 1, wobei der Ausfall des L2TP-Tunnels die Folge eines Ausfalls der ersten Komponente ist, auf der die fehlgeschlagene Aufgabe, die eine Datenmanager-Aufgabe ist, ausgeführt wird.

4. Verfahren nach Anspruch 1, wobei die Tunnelzustandsinformationen L2TP-Kopfteilinformationen umfassen.

5. Verfahren nach Anspruch 4, wobei die L2TP-Kopfteilinformationen eine Sequenznummer umfassen, die eine Kommunikationsnachricht kennzeichnet.

6. Kommunikationsserver zur Wiederherstellung einer Kommunikationssitzung über einen Tunnel, die durch Verwendung des Schicht-2-Tunnel-Protokolls, L2TP, zwischen dem Kommunikationsserver (120) und einem Peer-Endpunktserver (130) hergestellt ist, wenn eine Aufgabe ausfällt und einen Ausfall des Tunnels verursacht, wobei der Server Folgendes umfasst:
erste (223) und zweite (224) separate Komponenten, die dafür ausgelegt sind, Tunnelzustandsinformationen zu speichern, die den L2TP-Tunnel vor einem Ausfall des Tunnels beschreiben;
eine dritte Komponente (228), die dafür ausgelegt ist, die Tunnelzustandsinformation vor dem Ausfall des L2TP-Tunnels nicht zu speichern, und
wobei bei Ausfall des L2TP-Tunnels Folgendes aufgeführt wird: die zweite Komponente kann die Tunnelzustandsinformationen bereitstellen, die in der dritten Komponente gespeichert sind, und die dritte Komponente kann eine Kommunikation über den L2TP-Tunnel wiederherstellen, indem mindestens eine Sicherungsaufgabe, die auf der dritten Komponente ausgeführt wird, sowie die Tunnelzustandsinformationen, die der dritten Komponente (228) bereitgestellt werden, verwendet werden, wobei die mindestens eine Sicherungsaufgabe eine fehlgeschlagene Aufgabe auf der ersten Komponente (223) des Kommunikationsservers ersetzt, um über den L2TP-Tunnel zu kommunizieren.

7. Kommunikationsserver nach Anspruch 6, wobei die erste und zweite getrennte Komponente zwei oder mehr separate Platinen oder Karten sind.

8. Kommunikationsserver nach Anspruch 6, wobei der Ausfall des L2TP-Tunnels die Folge eines Ausfalls der ersten Komponente ist, auf der die fehlgeschlagene Aufgabe, die eine Datenmanager-Aufgabe ist, ausgeführt wird.

9. Kommunikationsserver nach Anspruch 6, wobei die Tunnelzustandsinformationen L2TP-Kopfteilinformationen umfassen.

10. Kommunikationsserver nach Anspruch 9, wobei die L2TP-Kopfteilinformationen eine Sequenznummer umfassen, die eine Kommunikationsnachricht kennzeichnet.

11. Computerlesbares Medium, das ausführbare Befehle umfasst, die das Verarbeitungssystem veranlassen, ein Verfahren nach einem der Ansprüche 1 bis 5 durchzuführen, wenn sie in einem Verarbeitungssystem ausgeführt werden.

## Revendications

1. Procédé permettant de récupérer une session de communication sur un tunnel établie en utilisant le protocole d'acheminement couche 2, L2TP, entre un serveur de communication (120) et un serveur de points terminaux du type point à point (130) quand une tâche échoue et entraîne la défaillance du tunnel, le procédé comportant:
l'étape consistant à stocker des informations d'état de tunnel, décrivant le tunnel L2TP, dans des au moins premier (223) et second (224) composants séparés du serveur de communication avant une défaillance du tunnel L2TP;
en réponse à la défaillance du tunnel L2TP, l'étape consistant à activer au moins une tâche de sauvegarde sur un troisième composant (228) du serveur de communication (120) qui ne stocke pas les informations d'état de tunnel avant la défaillance du tunnel et qui comporte les informations d'état de tunnel en provenance du second (224) composant lors de la défaillance du tunnel, ladite au moins une tâche de sauvegarde utilisant les informations d'état de tunnel stockées qui sont stockées sur le troisième composant (228) pour reprendre la communication sur le tunnel L2TP, dans lequel ladite au moins une tâche de sauvegarde remplace une tâche échouée sur le premier composant du serveur de communication à des fins de communication sur le tunnel L2TP.

2. Procédé selon la revendication 1, dans lequel lesdits au moins premier et second composants séparés sont deux ou plusieurs cartes de circuit imprimé ou plaquettes de circuit imprimé.

3. Procédé selon la revendication 1, dans lequel la défaillance du tunnel L2TP est le résultat d'une défaillance du premier composant sur lequel la tâche échouée, qui est une tâche de gestion de données, est exécutée.

4. Procédé selon la revendication 1, dans lequel les informations d'état de tunnel comportent des informations d'en-tête L2TP.

5. Procédé selon la revendication 4, dans lequel les informations d'en-tête L2TP comportent un numéro de séquence identifiant un message de communication.

6. Serveur de communication permettant de récupérer une session de communication sur un tunnel établie en utilisant le protocole d'acheminement couche 2, L2TP, entre le serveur de communication (120) et un serveur de points terminaux du type point à point (130) quand une tâche échoue et entraîne la défaillance du tunnel, le procédé comportant:
des premier (223) et second (224) composants séparés qui sont adaptés pour stocker des informations d'état de tunnel, décrivant le tunnel L2TP, avant une défaillance du tunnel;
un troisième composant (228) qui est adapté pour ne pas stocker les informations d'état de tunnel avant la défaillance du tunnel L2TP; et
dans lequel, lors de la défaillance du tunnel L2TP, le second composant est adapté pour fournir les informations d'état de tunnel stockées au troisième composant, et le troisième composant est adapté pour reprendre la communication sur le tunnel L2TP en utilisant au moins une tâche de sauvegarde exécutée sur le troisième composant et les informations d'état de tunnel fournies au troisième composant (228), dans lequel ladite au moins une tâche de sauvegarde remplace une tâche échouée sur le premier composant (223) du serveur de communication à des fins de communication sur le tunnel L2TP.

7. Serveur de communication selon la revendication 6, dans lequel les premier et second composants séparés sont deux ou plusieurs cartes de circuit imprimé ou plaquettes de circuit imprimé.

8. Serveur de communication selon la revendication 6, dans lequel la défaillance du tunnel L2TP est le résultat d'une défaillance du premier composant sur lequel la tâche échouée, qui est une tâche de gestion de données, est exécutée.

9. Serveur de communication selon la revendication 6, dans lequel les informations d'état de tunnel comportent des informations d'en-tête L2TP.

10. Serveur de communication selon la revendication 9, dans lequel les informations d'en-tête L2TP comportent un numéro de séquence identifiant un message de communication.

11. Support lisible par un ordinateur comprenant des instructions exécutables qui, quand elles sont exécutées dans un système de traitement, amènent le système de traitement à effectuer un procédé selon l'une quelconque des revendications 1 à 5.
